(19) Europäisches Patentamt
European Patent Office
Office européen des brevets

(11) **EP 1 099 046 B1**

(12) **EUROPÄISCHE PATENTSCHRIFT**

(45) Veröffentlichungstag und Bekanntmachung des Hinweises auf die Patenterteilung:
**21.07.2004 Patentblatt 2004/30**

(21) Anmeldenummer: **00912646.7**

(22) Anmeldetag: **25.03.2000**

(51) Int Cl.$^7$: **F01N 3/08**, F01N 3/20

(86) Internationale Anmeldenummer:
**PCT/EP2000/002658**

(87) Internationale Veröffentlichungsnummer:
**WO 2000/071865 (30.11.2000 Gazette 2000/48)**

(54) **ABGASREINIGUNGSANLAGE MIT INTERNER AMMONIAKERZEUGUNG ZUR STICKOX IDREDUKTION**

EXHAUST GAS CLEANING SYSTEM HAVING INTERNAL AMMONIA PRODUCTION FOR REDUCING NITROGEN OXIDES

INSTALLATION DE PURIFICATION DE GAZ D'ECHAPPEMENT A PRODUCTION INTERNE D'AMMONIAC POUR LA REDUCTION DES OXYDES AZOTIQUES

(84) Benannte Vertragsstaaten:
**DE FR GB IT**

(30) Priorität: **19.05.1999 DE 19922961**

(43) Veröffentlichungstag der Anmeldung:
**16.05.2001 Patentblatt 2001/20**

(73) Patentinhaber: **DaimlerChrysler AG**
**70567 Stuttgart (DE)**

(72) Erfinder:
• **GÜNTHER, Josef**
**D-71563 Affalterbach (DE)**

• **KRUTZSCH, Bernd**
**D-73770 Denkendorf (DE)**
• **SCHÖN, Christof**
**D-73630 Remshalden (DE)**
• **VOIGTLÄNDER, Dirk**
**D-70825 Korntal-Münchingen (DE)**
• **WEIBEL, Michel**
**D-70619 Stuttgart (DE)**
• **WEIRICH, Marko**
**D-70374 Stuttgart (DE)**

(56) Entgegenhaltungen:
• **Keine einschlägigen Dokumente gefunden**

## Beschreibung

Die Erfindung bezieht sich auf eine Abgasreinigungsanlage zur Reinigung des Abgases einer Verbrennungsquelle wenigstens von darin enthaltenen Stickoxiden nach dem Oberbegriff des Anspruchs 1.

Abgasreinigungsanlagen dieser Art werden insbesondere zur Abgasreinigung bei Kraftfahrzeug-Verbrennungsmotoren verwendet und sind z.B. in den Offenlegungsschriften EP 0 802 315 A2 und WO 97/17532 A1 beschrieben. Sie beinhalten einen Stickoxidreduktionskatalysator zur selektiven katalytischen Reduktion von im emittierten Abgas der Verbrennungsquelle enthaltenen Stickoxiden unter Verwendung von Ammoniak als Reduktionsmittel, abgekürzt als SCR-Verfahren bezeichnet. Um den Ammoniak oder ein Vorläuferprodukt nicht als Vorrat in einem Tank bereithalten zu müssen, ist dem Stickoxidreduktionskatalysator ein Ammoniakerzeugungskatalysator vorgeschaltet, der den benötigten Ammoniak unter Verwendung von Bestandteilen wenigstens eines Teils des von der Verbrennungsquelle emittierten Abgases während entsprechender Ammoniakerzeugungs-Betriebsphasen intern erzeugt, speziell durch eine Synthesereaktion von Wasserstoff und Stickstoffmonoxid. In diesen Ammoniakerzeugungs-Betriebsphasen wird für das dem Ammoniakerzeugungskatalysator zugeführte Abgas ein fettes Luftverhältnis eingestellt, um ausreichend Wasserstoff zur Verfügung zu haben. Unter fettem und magerem Luftverhältnis, auch Lambdawert genannt, wird hierbei wie üblich eine von der stöchiometrischen Zusammensetzung in Richtung kraftstoffreich bzw. sauerstoffreich abweichende Zusammensetzung des Abgases bzw. des zugehörigen, in der Verbrennungsquelle verbrannten Brennstoffgemischs verstanden. Dabei wird unter anderem schon aus Kraftstoffverbrauchsgründen angestrebt, die Verbrennungsquelle möglichst viel im Magerbetrieb und möglichst wenig im Fettbetrieb zu betreiben, z.B. dadurch, daß längere Magerbetriebsphasen mit kurzzeitigen Fettbetriebsphasen abwechseln oder im Fall einer mehrzylindrigen Brennkraftmaschine nur ein Teil der Zylinder bevorzugt ebenfalls nur zeitweise fett, die übrigen Zylinder dagegen kontinuierlich mager betrieben werden.

Als Ammoniakerzeugungskatalysator wird üblicherweise ein Dreiwegekatalysator eingesetzt, der als Katalysatormaterial z.B. Pt und/oder Rh auf einem $\gamma$-$Al_2O_3$-Träger beinhaltet, das geeignet ist, die Synthesereaktion von Wasserstoff und Stickstoffmonoxid zu Ammoniak zu katalysieren. Eine Schwierigkeit bei dieser Abgasreinigungstechnik mit interner Ammoniakerzeugung liegt darin, daß von den beiden zur Ammoniaksynthese benötigten Abgasbestandteilen Wasserstoff und Stickstoffmonoxid der Gehalt an Wasserstoff mit fetter werdender Abgaszusammensetzung zunimmt, derjenige an Stickstoffmonoxid jedoch abnimmt. Um ausreichend Wasserstoff für die Ammoniaksynthese im Abgas zur Verfügung zu haben, ist die Einstellung einer fetten Abgaszusammensetzung erforderlich, was üblicherweise durch die Einstellung eines entsprechenden Betriebszustands der Verbrennungsquelle bewirkt wird. Das dann von der Verbrennungsquelle emittierte, fette Abgas weist jedoch nur eine relativ niedrige Stickstoffmonoxidkonzentration auf, was ohne weitere Maßnahmen die Synthesereaktion limitiert. Andererseits ist es wünschenswert, während dieser Fettbetriebsphasen soviel Ammoniak wie möglich erzeugen zu können, um die Dauer der Fettbetriebsphasen aus Kraftstoffverbrauchsgründen möglichst gering zu halten.

Der Erfindung liegt daher als technisches Problem die Bereitstellung einer Abgasreinigungsanlage der eingangs genannten Art zugrunde, mit der sich in entsprechenden Ammoniakerzeugungs-Betriebsphasen mit fetter Zusammensetzung des dem Ammoniakerzeugungskatalysator zugeführten Abgases eine hohe Ausbeute an synthetisiertem Ammoniak zur Verwendung als Stickoxid-Reduktionsmittel erzielen läßt.

Die Erfindung löst dieses Problem durch die Bereitstellung einer Abgasreinigungsanlage mit den Merkmalen des Anspruchs 1. Diese Anlage weist außerhalb der Verbrennungsquelle eine Stickstoffmonoxid-Erzeugungseinheit auf, welche während der Ammoniakerzeugungs-Betriebsphasen das dem Ammoniakerzeugungskatalysator zugeführte Abgas mit von ihr erzeugtem Stickstoffmonoxid anreichert. Auf diese Weise steht für die Ammoniaksynthese im Ammoniakerzeugungskatalysator zusätzlich zu der Stickoxidmenge, die schon durch den Verbrennungsvorgang in der Verbrennungsquelle geliefert wird, jedoch aufgrund der fetten Zusammensetzung des verbrannten Brennstoffgemischs begrenzt ist, zusätzliches, außerhalb der Verbrennungsquelle erzeugtes Stickstoffmonoxid zur Verfügung. Dadurch läßt sich Ammoniak mit hoher Ausbeute während der Ammoniakerzeugungs-Betriebsphasen mit fetter Zusammensetzung des dem Ammoniakerzeugungskatalysator zugeführten Abgases gewinnen, so daß diese Fettbetriebsphasen relativ kurz gehalten werden können, was den Brennstoffverbrauch gering hält.

Als Stickstoffmonoxid-Erzeugungseinheit kann prinzipiell jede beliebige, dem Fachmann geläufige derartige Einheit verwendet werden. In einer Weiterbildung der Erfindung gemäß Anspruch 2 beinhaltet sie einen Plasmagenerator, mit dem das Stickstoffmonoxid durch plasmatechnische Oxidation von Stickstoff erzeugt wird, der in einem zugeführten Gasstrom enthalten ist, bei dem es sich insbesondere um einen Luftstrom oder einen von wenigstens einem Teil des von der Verbrennungsquelle emittierten Abgases gebildeten Abgasstrom handeln kann.

Eine vorteilhafte Ausführungsform der Erfindung ist in den Zeichnungen veranschaulicht und wird nachfolgend beschrieben. Hierbei zeigen:

Fig. 1 ein schematisches Blockdiagramm einer Brennkraftmaschine mit zugeordneter Abgasreinigungsanlage und

Fig. 2     ein Diagramm zur qualitativen Darstellung der Gehalte an Wasserstoff und Stickstoffmonoxid im Abgas der Brennkraftmaschine von Fig. 1 in Abhängigkeit vom Luft/Kraftstoff-Verhältnis des verbrannten Gemischs.

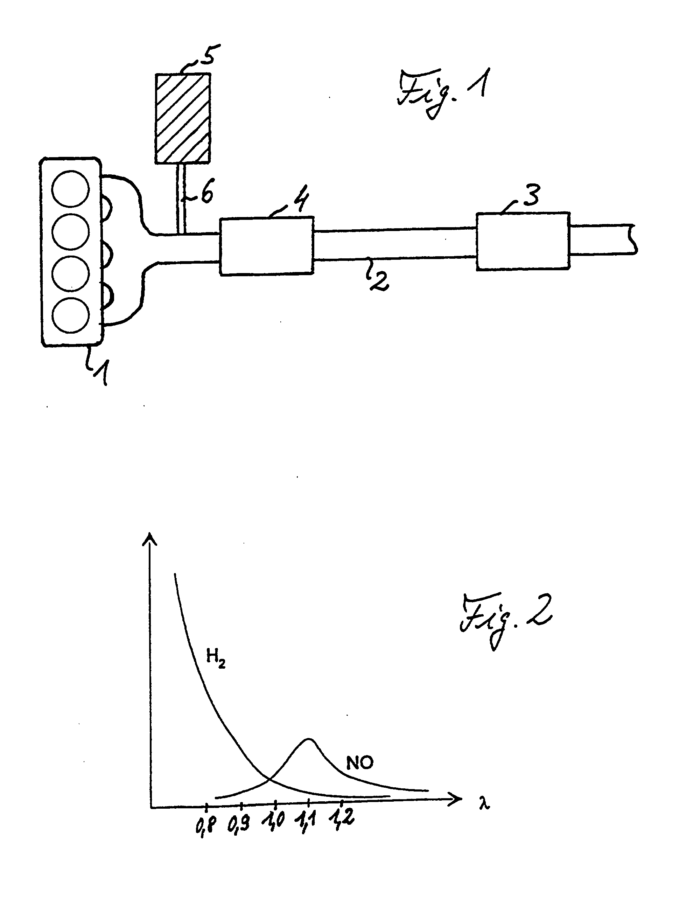

Fig. 1 zeigt schematisch eine Vierzylinder-Brennkraftmaschine 1, wie sie beispielsweise in einem Kraftfahrzeug eingesetzt werden kann, und Komponenten einer zugehörigen Abgasreinigungsanlage, so weit sie hier speziell interessieren. Im gezeigten Beispiel wird das in den vier Zylindern der Brennkraftmaschine 1 erzeugte Abgas in einem einkanaligen Abgasstrang 2 gesammelt und über diesen abgeführt. Zur Reinigung des Abgases von enthaltenen Stickoxiden ist im Abgasstrang 2 ein Stickoxidreduktionskatalysator 3 üblicher Bauart angeordnet, der zur katalytischen Stickoxidreduktion unter Einsatz von Ammoniak als Reduktionsmittel ausgelegt ist. Der benötigte Ammoniak wird im laufenden Betrieb von einem vorgeschalteten Ammoniakerzeugungskatalysator 4 aus Wasserstoff und Stickstoffmonoxid nach der Synthesereaktion

$$5H_2 + 2NO \rightarrow 2NH_3 + 2H_2O$$

unter der Wirkung eines geeigneten Katalysatormaterials synthetisiert. Der Ammoniakerzeugungskatalysator 4 kann beispielsweise bekanntermaßen von einem gängigen Dreiwegekatalysator mit einem geeigneten Pt- und/oder Rh-Katalysatormaterial auf einem $Al_2O_3$-Träger gebildet sein.

Um auf diese Weise ausreichend Ammoniak erzeugen und damit eine Bevorratung von Ammoniak oder eines Vorläuferproduktes, wie Harnstoff, vermeiden oder jedenfalls signifikant verringern zu können, muß der dem Ammoniakerzeugungskatalysator 4 zugeführte Abgasstrom entsprechende Mengen an Wasserstoff und Stickstoffmonoxid enthalten, wobei das theoretische Verhältnis von Wasserstoff zu Stickstoffmonoxid gemäß der obigen Synthesegleichung 5:2 beträgt. Damit das von der Brennkraftmaschine 1 emittierte Abgas genügend Wasserstoff enthält, so daß kein zusätzlicher Wasserstoff von außen zugeführt werden muß, wird die Brennkraftmaschine 1 durch ein nicht gezeigtes Motorsteuergerät während Ammoniakerzeugungs-Betriebsphasen mit einem fetten Luft/Kraftstoff-Gemisch, d.h. mit einem Luft/Kraftstoff-Verhältnis $\lambda$ kleiner als der stöchiometrische Wert eins betrieben.

Im Diagramm von Fig. 2 ist qualitativ veranschaulicht, daß die Wasserstoffkonzentration im Abgas der Brennkraftmaschine 1 mit vom stöchiometrischen Wert eins fallendem Lambdawert $\lambda$, d.h. mit fetter werdender Abgaszusammensetzung, signifikant ansteigt, so daß sich die jeweils erforderliche Wasserstoffmenge durch Einstellen eines entsprechend niedrigen Lambda-wertes $\lambda$ bereitstellen läßt. Fig. 2 ist jedoch des weiteren zu entnehmen, daß mit vom stöchiometrischen Wert eins abfallendem Lambdawert $\lambda$ die Stickstoffmonoxidkonzentration im Abgas der Verbrennungsquelle 1 deutlich sinkt. Genauer gesagt besitzt die entsprechende Stickstoffmonoxid-Kennlinie, wie in Fig. 2 qualitativ dargestellt, ein Maximum bei einem Lambda-wert $\lambda$ von etwa 1,1, d.h. im Bereich magerer Abgaszusammensetzung.

Es zeigt sich, daß in vielen Fällen nach Einstellung desjenigen Lambdawertes $\lambda$, der zur Bereitstellung des benötigten Wasserstoffs erforderlich ist, die dann im Abgas fetter Zusammensetzung enthaltene Stickstoffmonoxidmenge für eine optimale Ammoniakausbeute zu gering ist. Um dies zu kompensieren, weist die Abgasreinigungsanlage eine außerhalb der Brennkraftmaschine 1 angeordnete Stickstoffmonoxid-Erzeugungseinheit 5 auf, die zusätzliches Stickstoffmonoxid erzeugen kann, das über eine Einspeiseleitung 6 stromaufwärts des Ammoniakerzeugungskatalysators 4 dem Abgasstrom beigemischt wird. Dadurch wird das von der Brennkraftmaschine 1 emittierte Abgas fetter Zusammensetzung, das bereits eine zur Erzeugung der gewünschten Ammoniakmenge ausreichende Wasserstoffkonzentration aufweist, zusätzlich zu der begrenzten Stickstoffmonoxidmenge, die durch den Verbrennungsvorgang in der Brennkraftmaschine 1 selbst bereitgestellt wird, mit dem von der Stickstoffmonoxid-Erzeugungseinheit 5 erzeugten Stickstoffmonoxid so weit angereichert, daß im Ammoniakerzeugungskatalysator 4 Ammoniak aus den beiden im zugeführten Abgas enthaltenen Bestandteilen Wasserstoff und Stickstoffmonoxid mit optimaler Ausbeute synthetisiert werden kann.

Der im Ammoniakerzeugungskatalysator 4 erzeugte Ammoniak gelangt mit dem Abgasstrom in den nachgeschalteten Sickoxidreduktionskatalysator 3. Soweit dort das Abgas in dieser Betriebssituation noch geringe Mengen an Stickoxiden enthält, werden diese mit einem Teil des Ammoniaks als Reduktionsmittel umgesetzt. Der übrige Ammoniak wird im Stickoxidreduktionskatalysator 3 zwischengespeichert, wozu dieser eine entsprechende Ammoniakspeicherfähigkeit besitzt. Alternativ kann dem Stickoxidreduktionskatalysator 3 ein separater Ammoniakzwischenspeicher herkömmlichen Typs vorgeschaltet sein, z.B. in Form eines Ammoniakadsorptionskatalysators.

Sobald auf diese Weise während einer Ammoniakerzeugungs-Betriebsphase eine genügende Ammoniakmenge erzeugt und zwischengespeichert wurde, schaltet das nicht gezeigte Steuergerät auf eine Magerbetriebsphase um, in welcher es die Brennkraftmaschine 1 mit magerem Luft/Kraftstoff-Gemisch betreibt und die Stickstoffmonoxid-Erzeugungseinheit 5 abgeschaltet hält. In dieser Magerbetriebsphase erfüllt der Ammoniakerzeugungskatalysator 4, wenn er von einem Dreiwegekatalysator gebildet ist, die übliche Magerbetrieb-Abgasreinigungsfunktion eines solchen Dreiwegekatalysators, und die im Abgas durch den Magerbetrieb in erhöhter Menge vorliegenden Stickoxide werden im Stickoxidreduktionskatalysator 3 durch selektive katalytische Reduktion mit dem zwischengespeicherten Ammoniak als Reduktionsmittel nach den folgenden Reaktionsgleichungen

$$4NH_3 + 4NO + O_2 \rightarrow 4N_2 + 6H_2O$$

$$8NH_3 + 6NO_2 \rightarrow 7N_2 + 12H_2O$$

in Stickstoff und Wasser umgesetzt. In dieser Weise wird das System periodisch abwechselnd mit magerem und fettem Lambdawert $\lambda$, d.h. Luftverhältnis, betrieben.

In einer alternativen Ausführungsform der Erfindung werden nicht alle Zylinder der Brennkraftmaschine mit gleichem Luftverhältnis betrieben, sondern es wird nur ein Teil der Zylinder wenigstens zeitweise zwecks Ammoniakerzeugung fett betrieben, während die übrigen Zylinder kontinuierlich im Magerbetrieb gefahren werden. Der Abgasstrang wird entsprechend in wenigstens zwei parallele Zweige aufgeteilt, und der Ammoniakerzeugungskatalysator wird samt der zugehörigen Stickstoffmonoxid-Erzeugungseinheit an demjenigen Abgasleitungszweig angeordnet, der das Abgas der wenigstens teilweise fett betriebenen Zylinder führt. Dabei können die letztgenannten Zylinder entweder kontinuierlich fett oder periodisch abwechselnd fett und mager betrieben werden. Die verschiedenen Abgasleitungszweige werden dann vor dem Eingang des Stickoxidreduktionskatalysators wieder zusammengeführt.

Die Stickstoffmonoxid-Erzeugungseinheit 5 beinhaltet in einer bevorzugten Realisierung einen Plasmagenerator, mit dem bei Aktivierung ein heißes Plasma erzeugt wird. Ein der Stickstoffmonoxid-Erzeugungseinheit 5 zugeführter, stickstoffhaltiger Gasstrom wird durch das heiße Plasma hindurchgeleitet, wobei unter der Wirkung des Plasmas der im Gasstrom enthaltene Stickstoff zu Stickstoffmonoxid oxidiert wird. Das dadurch gebildete Stickstoffmonoxid wird dann mit dem Gasstrom über die Einspeiseleitung 6 dem von der Brennkraftmaschine 1 kommenden Abgasstrom beigemischt, so daß dieser mit dem plasmatechnisch erzeugten Stickstoffmonoxid angereichert wird. Als dem Plasma zugeführter, stickstoffhaltiger Gasstrom kann ein von der Außenumgebung angesaugter Luftstrom oder ein Abgasteilstrom verwendet werden, der aus einem Teil des von der Verbrennungsquelle 1 emittierten Abgases besteht. Die hierzu jeweils erforderlichen Strömungsführungsmittel, wie eine Luftansaugleitung oder eine Abgasabzweigleitung, die vom Abgasstrang 2 an einer stromaufwärts von der Mündungsstelle der Einspeiseleitung 6 gelegenen Stelle abgeht und zum Plasmagenerator 5 führt, sind dem Fachmann geläufig und daher nicht näher gezeigt.

Es versteht sich, daß sich die Erfindung nicht nur für Brennkraftmaschinen von Kraftfahrzeugen, sondern auch für beliebige andere instationäre oder stationäre Verbrennungsqellen nutzbringend einsetzen läßt. In jedem Fall wird durch die erfindungsgemäße Verwendung der Stickstoffmonoxid-Erzeugungseinheit extern von der Verbrennungsquelle erreicht, daß während der Ammoniakerzeugungs-Betriebsphasen mit fetter Zusammensetzung des in den Ammoniakerzeugungskatalysator geleiteten Abgases mehr Ammoniak'synthetisiert werden kann als ohne diese zusätzliche Stickstoffmonoxiderzeugung, wodurch sich der Anteil von Fett- zu Magerbetriebsphasen für die vorliegende Abgasreinigungstechnik mit selektiver katalytischer Stickoxidreduktion unter Einsatz von intern erzeugtem Ammoniak verringern läßt. Der Brennstoffmehrverbrauch durch den Fettbetrieb für die interne Ammoniakerzeugung fällt dadurch vergleichsweise gering aus. Es versteht sich, daß durch entsprechende weitere Abgasreinigungskomponenten je nach Anwendungsfall weitere Abgasreinigungsfunktionalitäten neben der explizit beschriebenen Stickoxidreduktion vorgesehen sein können. Des weiteren kann, wenn sich dies als zweckmäßig erweisen sollte, Ammoniak oder ein Vorläuferprodukt zusätzlich in gewisser Menge von außen in den Abgasstrang zudosiert werden, wobei sich die zu bevorratende Menge an Ammoniak bzw. dem Vorläuferprodukt durch die interne Ammoniakerzeugung geringer halten läßt als ohne die interne Ammoniaksynthese.

**Patentansprüche**

1. Abgasreinigungsanlage zur Reinigung des Abgases einer Verbrennungsquelle, insbesondere eines Kraftfahrzeug-Verbrennungsmotors, wenigstens von darin enthaltenen Stickoxiden mit

- einem Ammoniakerzeugungskatalysator (4) zur Erzeugung von Ammoniak unter Verwendung von Bestandteilen wenigstens eines Teils des von der Verbrennungsquelle (1) emittierten Abgases während Ammoniakerzeugungs-Betriebsphasen und
- einem dem Ammoniakerzeugungskatalysator nachgeschalteten Stickoxidreduktionskatalysator (3) zur Reduktion von im emittierten Abgas der Verbrennungsquelle enthaltenen Stickoxiden unter Verwendung des erzeugten Ammoniaks als Reduktionsmittel,

**gekennzeichnet durch**

- eine verbrennungsquellenexterne Stickstoffmonoxid-Erzeugungseinheit (5) zur Anreicherung des dem Ammoniakerzeugungskatalysator (4) zugeführten Abgases mit von ihr erzeugtem Stickstoffmonoxid während der Ammoniakerzeugungs-Betriebsphasen.

**2.** Abgasreinigungsanlage nach Anspruch 1, weiter **dadurchgekennzeichnet**, daß die Stickstoffmonoxid-Erzeugungseinheit (5) einen Plasmagenerator zur plasmatechnischen Oxidation von in einem zugeführten Gasstrom enthaltenem Stickstoff in Stickstoffmonoxid beinhaltet.

## Claims

**1.** An exhaust emission control system for cleaning the exhaust emissions of a combustion source, in particular of a motor vehicle internal combustion engine, at least of nitrogen oxides contained therein, having

- an ammonia-producing catalytic converter (4) for producing ammonia using components of at least one part of the exhaust emissions emitted by the combustion source (1) during ammonia-producing operating phases and
- a NOx reduction catalytic converter (3) connected downstream of the ammonia-producing catalytic converter for the reduction of nitrogen oxides contained in the exhaust emissions emitted by the combustion source using the ammonia produced as a reduction agent,

**characterised by**

- a nitrogen monoxide producing unit (5) external to the combustion source to enrich the exhaust emissions supplied to the ammonia-producing catalytic converter (4) with nitrogen monoxide produced by it during the ammonia-producing operating phases.

**2.** An exhaust emission control system in accordance with claim 1,
**characterised in that**
the nitrogen monoxide producing unit (5) contains a plasma generator for the plasma-technical oxidation of nitrogen contained in a supplied flow of emissions into nitrogen monoxide.

## Revendications

**1.** Installation de purification de gaz d'échappement pour la purification des gaz d'échappement d'une source de combustion, en particulier d'un moteur à combustion de véhicules automobiles, contenant au moins des oxydes d'azote, présentant :

- un catalyseur de production d'ammoniac (4) pour produire de l'ammoniac en utilisant les constituants d'au moins une partie des gaz d'échappement émis de la source de combustion (1) pendant les phases de fonctionnement et de production d'ammoniac, et
- un catalyseur de réduction des oxydes d'azote (3), disposé après le catalyseur de production d'ammoniac, pour la réduction des oxydes d'azote présents dans les gaz d'échappement émis de la source de combustion, en utilisant l'ammoniac produit comme agent de réduction,

**caractérisée par**

- une unité de production de monoxyde d'azote (5) externe à la source de combustion, pour enrichir les gaz d'échappement amenés au catalyseur de production d'ammoniac (4), en monoxyde d'azote produit par celle-ci pendant les phases de fonctionnement et de production d'ammoniac.

**2.** Installation de purification de gaz d'échappement selon la revendication 1, **caractérisée en outre en ce que** l'unité de production de monoxyde d'azote (5) contient un générateur de plasma pour l'oxydation par la technique du plasma de l'azote présent dans le courant gazeux alimenté, en monoxyde d'azote.

Fig. 1

Fig. 2